# EUROPÄISCHE PATENTSCHRIFT

(11) **EP 2 603 672 B1**
(45) Veröffentlichungstag und Bekanntmachung des Hinweises auf die Patenterteilung: **31.08.2016**
(21) Anmeldenummer: 11752212.8
(22) Anmeldetag: 02.09.2011
(51) Int. Cl.: F01K 23/10, F22G 5/12

(54) **ABHITZEDAMPFERZEUGER**
WASTE HEAT STEAM GENERATOR
GÉNÉRATEUR DE VAPEUR À RÉCUPÉRATION DE CHALEUR

(30) Priorität: 13.09.2010 DE 102010040624
(43) Veröffentlichungstag der Anmeldung: 19.06.2013
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlangen (DE)
(86) Internationale Anmeldenummer: PCT/EP2011/065176
(87) Internationale Veröffentlichungsnummer: WO 2012/034870

(56) Entgegenhaltungen:
- EP-A1- 0 911 504
- EP-A2- 2 172 622
- DE-A1-102010 060 064
- DE-B- 1 177 170
- GB-A- 741 984
- US-B1- 6 766 646

## Beschreibung

Die Erfindung betrifft einen Abhitzedampferzeuger für ein Gas- und Dampfturbinenkraftwerk mit einer Anzahl von einen Strömungsweg bildenden, von einem Strömungsmedium durchströmten Economiser-, Verdampfer- und Überhitzerheizflächen, bei dem eine Überströmleitung aus dem Strömungsweg abzweigt und zu einer Anzahl von strömungsmediumsseitig hinter einer Überhitzerheizfläche im Strömungsweg angeordneten Einspritzventilen führt. Sie betrifft weiter ein Verfahren zur Regelung einer kurzfristigen Leistungserhöhung einer Dampfturbine mit einem vorgeschalteten Abhitzedampferzeuger.

Ein Abhitzedampferzeuger ist ein Wärmetauscher, der Wärme aus einem heißen Gasstrom zurückgewinnt. Abhitzedampferzeuger kommen häufig in Gas- und Dampfturbinenanlagen (GuD-Anlagen) zum Einsatz, die überwiegend der Stromerzeugung dienen. Dabei umfasst eine moderne GuD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine auf einer gemeinsamen Welle einen einzigen Generator antreibt (Einwellenanlage). Die heißen Abgase der Gasturbine werden dabei in dem Abhitzedampferzeuger zur Erzeugung von Wasserdampf verwendet. Der Dampf wird anschließend der Dampfturbine zugeführt. Üblicherweise entfallen ca. zwei Drittel der elektrischen Leistung auf die Gasturbine und ein Drittel auf den Dampfprozess.

Analog zu den verschiedenen Druckstufen einer Dampfturbine umfasst auch der Abhitzedampferzeuger eine Mehrzahl von Druckstufen mit unterschiedlichen thermischen Zuständen des jeweils enthaltenen Wasser-Dampf-Gemisches. In jeder dieser Druckstufen durchläuft das Strömungsmedium auf seinem Strömungsweg zunächst Economiser, die Restwärme zur Vorwärmung des Strömungsmediums nutzen, und anschließend verschiedene Stufen von Verdampfer- und Überhitzerheizflächen. Im Verdampfer wird das Strömungsmedium verdampft, danach eventuelle Restnässe in einer Abscheideeinrichtung abgetrennt und der übrig behaltene Dampf im Überhitzer weiter erhitzt.

Aufgrund von Lastschwankungen kann die an die Überhitzer übertragene Wärmeleistung stark beeinflusst werden. Daher ist es häufig notwendig, die Überhitzungstemperatur zu regeln. Bei neuen Anlagen wird dies meistens durch eine Einspritzung von Speisewasser zwischen den Überhitzerheizflächen zur Kühlung erreicht, d. h., eine Überströmleitung zweigt vom Hauptstrom des Strömungsmediums ab und führt zu dort entsprechend angeordneten Einspritzventilen. Die Einspritzung wird dabei über die Austrittstemperaturen an dem jeweiligen Überhitzer geregelt.

Von modernen Kraftwerken werden nicht nur hohe Wirkungsgrade gefordert, sondern auch eine möglichst flexible Betriebsweise. Hierzu gehört außer kurzen Anfahrzeiten und hohen Laständerungsgeschwindigkeiten auch die Möglichkeit, Frequenzstörungen im Stromverbundnetz auszugleichen. Um diese Anforderungen zu erfüllen, muss das Kraftwerk in der Lage sein, Mehrleistungen von beispielsweise 5 % und mehr innerhalb weniger Sekunden zur Verfügung zu stellen.

Dies wird in bisher üblichen GuD-Kraftwerken üblicherweise durch eine Lasterhöhung der Gasturbine realisiert. Der Druckschrift US-B1-6 766 646 offenbart einen solchen GuD-Kraftwerk. Unter gewissen Umständen kann es aber insbesondere im oberen Lastbereich möglich sein, dass der gewünschte Leistungsanstieg nicht ausschließlich durch die Gasturbine bereitgestellt werden kann. Daher werden mittlerweile auch Lösungen verfolgt, bei denen die Dampfturbine ebenfalls einen zusätzlichen Beitrag zur Frequenzstützung in den ersten Sekunden leisten kann und soll.

Dies kann beispielsweise durch das Öffnen teilweise angedrosselter Turbinenventile der Dampfturbine oder eines so genannten Stufenventils geschehen, wodurch der Dampfdruck vor der Dampfturbine abgesenkt wird. Dampf aus dem Dampfspeicher des vorgeschalteten Abhitzedampferzeugers wird dadurch ausgespeichert und der Dampfturbine zugeführt. Mit dieser Maßnahme wird innerhalb weniger Sekunden ein Leistungsanstieg im Dampf Teil des GuD-Kraftwerks erreicht.

Diese zusätzliche Leistung kann in relativ kurzer Zeit freigesetzt werden, so dass die verzögerte Leistungserhöhung durch die Gasturbine (begrenzt durch deren konstruktions- und betriebsbedingte maximale Laständerungsgeschwindigkeit) zumindest teilweise kompensiert werden kann. Der gesamte Block macht durch diese Maßnahme unmittelbar einen Leistungssprung und kann durch eine nachfolgende Leistungssteigerung der Gasturbine auch dieses Leistungsniveau dauerhaft halten bzw. überschreiten, vorausgesetzt die Anlage befand sich zum Zeitpunkt der zusätzlich angeforderten Leistungsreserven im Teillastbereich.

Eine permanente Androsselung der Turbinenventile zur Vorhaltung einer Reserve führt jedoch immer zu einem Wirkungsgradverlust, so dass für eine wirtschaftliche Fahrweise der Grad der Androsselung so gering wie unbedingt notwendig gehalten werden sollte. Zudem weisen einige Bauformen von Abhitzedampferzeugern, so z. B. Zwangdurchlaufdampferzeuger unter Umständen ein erheblich kleineres Speichervolumen auf als z. B. Naturumlauf-Dampferzeuger. Der Unterschied in der Größe des Speichers hat im oben beschriebenen Verfahren Einfluss auf das Verhalten bei Leistungsänderungen des Dampfteils des GuD-Kraftwerks.

Es ist daher Aufgabe der Erfindung, einen Abhitzedampferzeuger der oben genannten Art anzugeben, der in besonderem Maße in der Lage ist, eine kurzfristige Leistungssteigerung einer nachgeschalteten Dampfturbine zu ermöglichen, ohne dass dabei der Wirkungsgrad des Dampfprozesses über Gebühr beeinträchtigt wird. Gleichzeitig soll die kurzfristige Leistungssteigerung unabhängig von der Bauform des Abhitzedampferzeugers ermöglicht werden. Es ist weiter Aufgabe der Erfindung, ein entsprechendes GuD-Kraftwerk sowie ein Verfahren zur Regelung einer kurzfristigen Leistungserhöhung einer Dampfturbine mit einem vorgeschalteten Abhitzedampferzeuger anzugeben.

Bezüglich des Abhitzedampferzeugers wird diese Aufgabe erfindungsgemäß gelöst, indem der Abzweigort der Überströmleitung vor der strömungsmediumsseitig ersten Verdampferheizfläche und strömungsmediumsseitig hinter einer Economizerheizfläche angeordnet ist.

Die Erfindung geht dabei von der Überlegung aus, dass zusätzliches Einspritzen von Speisewasser einen weiteren Beitrag zur schnellen Leistungsänderung leisten kann. Durch zusätzliches Einspritzwasser im Bereich der Überhitzer kann nämlich der Dampfmassenstrom kurzfristig erhöht werden. Eine zu große Einspritzmenge senkt unter Umständen jedoch die Temperatur des Dampfes zu stark ab. Dem sollte begegnet werden, indem die spezifische Enthalpie des Einspritzwassers erhöht wird, da so eine höhere Einspritzmenge bei gleichem Dampftemperatursollwert möglich ist. Eine derartige Erhöhung der spezifischen Enthalpie des Einspritzwassers ist dadurch erreichbar, dass dieses eine zusätzliche Wärmeaufnahme durch Economizerheizflächen erfährt. Das heißt, die Überströmleitung für das Einspritzwasser sollte strömungsmediumsseitig hinter einer Economizerheizfläche liegen.

Eine derartige Entnahme hinter einer Economizerheizfläche stellt bereits eine Verbesserung hinsichtlich der Optimierung des Einspritzsystems zur Bereitstellung einer Sofortreserve dar. Allerdings kann der Dampfmassenstrom bei gleichbleibender Dampftemperatur umso weiter erhöht werden, je höher die spezifische Enthalpie des Einspritzwassers ist. Durch eine weitere Vorwärmung des Einspritzwassers ist dies erreichbar. Daher sollte der Abzweigort der Überströmleitung strömungsmediumsseitig hinter der letzten Economizerheizfläche angeordnet sein.

Durch die Verlagerung des Abzweigortes in Richtung Verdampfer verringert sich jedoch der strömungsseitige Abstand zwischen Entnahme- und Einspritzort. Zwischen Ein- und Austritt der Überströmleitung ist daher zu gewährleisten, dass die Druckdifferenz ausreichend groß ist, damit ein zufriedenstellender Durchsatz des Einspritzwassers durch das Einspritzventil sichergestellt werden kann. Ein Durchflussregelventil für das Strömungsmedium ist daher strömungsmediumsseitig hinter dem Abzweigort der Überströmleitung angeordnet. Dadurch wird der Druck an der Abzweigstelle erhöht und es kann eine ausreichende Druckdifferenz für alle Betriebsfälle sichergestellt werden. Allerdings sind die Economiser für den entsprechend höheren Betriebsdruck auszulegen.

In weiterer vorteilhafter Ausgestaltung ist strömungsmediumsseitig hinter dem Abzweigort der Überströmleitung eine Durchflussmesseinrichtung für das Strömungsmedium angeordnet. Die Entnahmemenge muss dann nämlich unter diesen Umständen für die Speisewasserregelung nicht über eine zusätzliche Messung oder eine separate Bilanzierung berücksichtigt werden.

Bezüglich eines Verfahrens zur Regelung einer kurzfristigen Leistungserhöhung einer Dampfturbine mit einem vorgeschalteten Abhitzedampferzeuger mit einer Anzahl von einen Strömungsweg bildenden, von einem Strömungsmedium durchströmten Economiser-, Verdampfer- und Überhitzerheizflächen, bei dem Strömungsmedium aus dem Strömungsweg abgezweigt und strömungsmediumsseitig hinter einer Überhitzerheizfläche in den Strömungsweg eingespritzt wird, wird die Aufgabe gelöst, indem das Strömungsmedium vor der strömungsmediumsseitig ersten Verdampferheizfläche und strömungsmediumsseitig hinter einer Economizerheizfläche abgezweigt wird.

Die mit der Erfindung erzielten Vorteile bestehen insbesondere darin, dass durch die Entnahme von Einspritzwasser für den Überhitzer hinter einer ersten Economizerheizfläche bei der Nutzung der Einspritzung zur Frequenzstützung ein größerer Anstieg der entbundenen Dampfturbinenleistung gewonnen werden kann. Höhere Temperaturen/Enthalpien des Einspritzwassers resultieren nämlich in einer größeren Einspritzmenge, vorausgesetzt, der Dampftemperatursollwert bleibt gleich. Diese größere Einspritzmenge vergrößert simultan den Frischdampfmassenstrom, der durch die Dampfturbine strömt.

Ist parallel eine Androsselung der Turbinenventile realisiert, kann unter diesen Umständen der Androsselungsgrad vermindert werden und trotzdem die erforderliche Leistungserhöhung generiert werden. Somit kann die GuD-Anlage im gewöhnlichen Lastbetrieb (in der sie für eine Sofortreserve zur Verfügung stehen muss) aufgrund einer geringeren Androsselung mit einem vergleichsweise größeren Wirkungsgrad betrieben werden.

Dadurch, dass im gewöhnlichen Betrieb insbesondere ein Zwangdurchlauf-Abhitzedampferzeuger mit BENSON-Verdampfer im gesamten Lastbereich im Normalfall ohne Einspritzung in den Überhitzer auskommt (ebenfalls zur gegebenenfalls Wirkungsgradverbesserung), hat systembedingt eine größere Enthalpie des Einspritzwassers keine zusätzlichen negativen Begleiterscheinungen. Das bedeutet, dass es für den gewöhnlichen Anlagenbetrieb unerheblich ist, an welcher Stelle das Einspritzwasser entnommen wird.

Ein Ausführungsbeispiel der Erfindung wird anhand einer Zeichnung näher erläutert. Darin zeigt die FIG strömungsmediumsseitig den Hochdruckteil eines Abhitzedampferzeugers mit Verschaltung der Komponenten des Einspritzsystems gemäß der Erfindung.

Vom Abhitzedampferzeuger 1 ist in der FIG beispielhaft der Hochdruckteil dargestellt. Die Erfindung kann natürlich auch in anderen Druckstufen zur Anwendung kommen. Die FIG stellt schematisch den Strömungsweg 2 des Strömungsmediums M dar. Die räumliche Anordnung der einzelnen Heizflächen 4 des Economisers 6, des Verdampfers 8 und des Überhitzers 10 im Heißgaskanal ist nicht dargestellt und kann variieren.

Das Strömungsmedium M wird von der Speisepumpe 12 unter entsprechendem Druck in den Hochdruck-Strömungsweg 2 des Abhitzedampferzeugers 1 gefördert. Dabei durchläuft das Strömungsmedium M zunächst einen Economiser 6, der eine Vielzahl von Heizflächen 4 umfassen kann. Der Economiser 6 ist typischerweise im kältesten Teil des Heißgaskanals angeordnet, um dort eine Nutzung von Restwärme zur Erhöhung des Wirkungsgrades zu erreichen. Anschließend durchläuft das Strömungsmedium M die Heizflächen 4 des Verdampfers 8 und des Überhitzers 10. Zwischen Verdampfer 8 und Überhitzer 10 kann dabei noch eine nicht näher dargestellte Abscheideeinrichtung angeordnet sein, die die Restnässe aus dem Strömungsmedium M entfernt, so dass nur noch reiner Dampf in den Überhitzer 10 gelangt. Vom Überhitzer 10 strömt das Strömungsmedium M schließlich zur nachgeschalteten, nicht dargestellten Dampfturbine.

Die in der FIG dargestellten Heizflächen 4 stehen jeweils stellvertretend für eine Mehrzahl seriell geschalteter Heizflächen, die jedoch aufgrund der Übersichtlichkeit nicht differenziert dargestellt sind.

Zwischen einzelnen Heizflächen 4 des Überhitzers 10 ist strömungsmediumsseitig ein Einspritzventil 14 angeordnet, ein weiteres Einspritzventil 14 ist nach der letzten Heizfläche 4 des Überhitzers 10 angeordnet. Hier kann kühleres und unverdampftes Strömungsmedium M zur Regelung der Austrittstemperatur am Austritt 16 des Hochdruckteils des Abhitzedampferzeugers 1 eingespritzt werden. Die in die Einspritzventile 14 zur Zwischen- bzw. Endeinspritzung eingebrachte Menge an Strömungsmedium M wird über Regelventile 18 geregelt. Das Strömungsmedium M wird dabei über eine zuvor im Strömungsweg 2 abzweigende Überströmleitung 20 zugeführt.

Um das Einspritzsystem jedoch nicht nur zur Regelung der Austrittstemperatur, sondern auch zur Bereitstellung einer sofortigen Leistungsreserve nutzen zu können, ist der Abzweigort 22 der Überströmleitung 20 zwischen den Heizflächen 4 des Verdampfers 8 und den Heizflächen 4 des Economisers 6 angeordnet. Somit hat das durch die Einspritzventile 14 eingespritzte Strömungsmedium M eine wesentlich höhere spezifische Enthalpie als bei einer Entnahme vor dem Economiser 6 und es kann bei gleicher Solltemperatur am Austritt 16 eine größere Menge eingespritzt werden. Dadurch wird die Dampfmenge erheblich erhöht während die Temperatur zwar absinkt, aber durch Nutzung von Ausspeichereffekten kurzfristig auf vergleichsweise höherem Niveau gehalten werden kann. Somit wird die Leistung der nachgeschalteten Dampfturbine erhöht.

Im Ausführungsbeispiel nach der FIG durchläuft das Strömungsmedium M alle Heizflächen 4 des Economisers 6, bevor ein Teil am Abzweigort 22 entnommen wird. Sollte eine Entnahme an dieser Stelle nicht möglich sein, so stellt auch eine Entnahme zwischen zwei Heizflächen 4 des Economisers 6 eine Verbesserung hinsichtlich der Optimierung für die Sofortreserve dar, da auch hier im Vergleich zum Eintritt des Economisers 6 bereits eine größere Enthalpie des Strömungsmediums vorliegt.

Im Strömungsweg 2 ist nach dem Abzweigort 22 der Überströmleitung 20 eine Durchflussmesseinrichtung 24 sowie das Durchflussregelventil 26 für den Strömungsweg angeordnet. Dadurch herrscht am Abzweigort 22 der Überströmleitung 20 der hohe Druck durch die Speisepumpe 12, so dass zwischen Eintritt und Austritt der Überströmleitung eine ausreichend hohe Druckdifferenz gewährleistet ist, um einen entsprechend erhöhten Durchfluss für die zusätzliche Leistungsentbindung zu ermöglichen. Der Economiser 6 ist baulich entsprechend für einen derartig hohen Druck ausgelegt.

Die Anordnung der Durchflussmesseinrichtung 24 hinter dem Abzweigort 22 erlaubt die Messung des Durchflusses ohne Berücksichtigung der Entnahmemenge durch die Überströmleitung 20. Diese müsste ansonsten über eine zusätzliche Messung oder eine separate Bilanzierung berücksichtigt werden.

Ein derart ausgestalteter Abhitzedampferzeuger 1 kommt nun in einem Gas- und Dampfturbinenkraftwerk zum Einsatz. Hier werden die heißen Abgase einer oder mehrerer Gasturbinen rauchgasseitig durch den Abhitzedampferzeuger geführt, der somit Dampf für eine Dampfturbine bereitstellt. Die Dampfturbine umfasst dabei mehrere Druckstufen, d. h., der vom Hochdruckteil des Abhitzedampferzeugers 1 erhitzte und in der ersten Stufe (Hochdruckstufe) der Dampfturbine entspannte Dampf wird in eine Mitteldruckstufe des Abhitzedampferzeugers 1 geführt und dort erneut überhitzt, allerdings auf niedrigerem Druckniveau. Wie bereits erwähnt, zeigt das Ausführungsbeispiel gemäß der FIG den Hochdruckteil des Abhitzedampferzeugers 1 zur exemplarischen Verdeutlichung der Erfindung, diese kann jedoch auch in anderen Druckstufen zur Anwendung kommen.

Ein mit einem derartigen Abhitzedampferzeuger ausgestattetes Gas- und Dampfturbinenkraftwerk ist in der Lage, nicht nur über eine kurzfristige Leistungserhöhung der Gasturbine, welche über die erlaubte Maximallaständerungsgeschwindigkeit begrenzt ist, sondern auch über eine sofortige Leistungsentbindung der Dampfturbine schnell eine Leistungserhöhung zu leisten, die zur Stützung der Frequenz des Verbundstromnetzes dient.

Dadurch, dass diese Leistungsreserve durch eine Doppelnutzung der Einspritzarmaturen neben der üblichen Temperaturregelung erreicht wird, kann auch eine permanente Androsselung der Dampfturbine zur Bereitstellung einer Reserve verringert werden oder ganz entfallen, wodurch ein besonders hoher Wirkungsgrad während des normalen Betriebs erreicht wird.

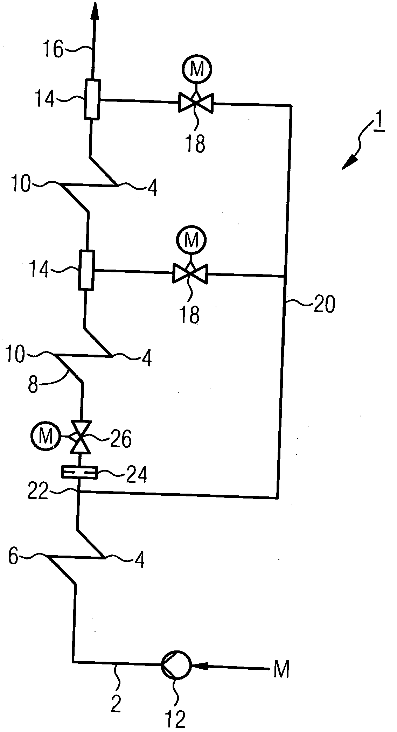

## Patentansprüche

1. Abhitzedampferzeuger (1) für ein Gas- und Dampfturbinenkraftwerk mit einer Anzahl von einen Strömungsweg (2) bildenden, von einem Strömungsmedium (M) durchströmten Economiser-, Verdampfer- und Überhitzerheizflächen (4), bei dem eine Überströmleitung (20) aus dem Strömungsweg (2) abzweigt und zu einer Anzahl von strömungsmediumsseitig hinter einer Überhitzerheizfläche (10) im Strömungsweg (2) angeordneten Einspritzventilen (14) führt,
wobei der Abzweigort (22) der Überströmleitung (20) vor der strömungsmediumsseitig ersten Verdampferheizfläche (8) und strömungsmediumsseitig hinter einer Economizerheizfläche (6) angeordnet ist,
**dadurch gekennzeichnet, dass** der Abzweigort (22) der Überströmleitung (20) strömungsmediumsseitig hinter der letzten Economizerheizfläche (6) angeordnet ist und strömungsmediumsseitig hinter dem Abzweigort (22) der Überströmleitung (20) ein Durchflussregelventil (26) für das Strömungsmedium (M) angeordnet ist.

2. Abhitzedampferzeuger (1) nach Anspruch 1, bei dem strömungsmediumsseitig hinter dem Abzweigort (22) der Überströmleitung (20) eine Durchflussmesseinrichtung (24) für das Strömungsmedium (M) angeordnet ist.

3. Verfahren zur Regelung einer kurzfristigen Leistungserhöhung einer Dampfturbine mit einem vorgeschalteten Abhitzedampferzeuger (1) mit einer Anzahl von einen Strömungsweg (2) bildenden, von einem Strömungsmedium (M) durchströmten Economiser-, Verdampfer- und Überhitzerheizflächen (4), bei dem Strömungsmedium (M) aus dem Strömungsweg (2) abgezweigt und strömungsmediumsseitig hinter einer Überhitzerheizfläche (10) in den Strömungsweg eingespritzt wird, wobei das Strömungsmedium (M) vor der strömungsmediumsseitig ersten Verdampferheizfläche (8) und strömungsmediumsseitig hinter der letzten Economizerheizfläche (6) abgezweigt wird, **dadurch gekennzeichnet, dass** strömungsmediumsseitig hinter dem Abzweigort (22) der Überströmleitung (20) ein Durchflussregelventil (26) für das Strömungsmedium (M) angeordnet ist und der Durchfluss des Strömungsmediums (M) geregelt wird.

4. Verfahren nach Anspruch 3, bei dem strömungsmediumsseitig hinter dem Abzweigort (22) der Überströmleitung (20) der Durchfluss des Strömungsmediums (M) gemessen wird.

## Claims

1. Waste heat steam generator (1) for a combined cycle power plant with a number of economiser, evaporator and superheater heating surfaces (4) forming a flow path (2) through which a flow medium (M) flows, in which an overflow line (20) branches off from the flow path (2) and leads to a number of injection valves (14) disposed in the flow path (2) on the flow medium side downstream of a superheater heating surface (10), wherein the branching-off point (22) of the overflow line (20) is disposed on the flow medium side upstream of the first evaporator heating surface (8) and is disposed downstream of an economiser heating surface (6) on the flow medium side, **characterised in that** the branching-off point (22) of the overflow line (20) is disposed on the flow medium side downstream of the last economiser heating surface (6) and a throughflow valve (26) for the flow medium (M) is disposed on the flow medium side downstream of the branching-off point (22) of the overflow line (20).

2. Waste heat steam generator (1) according to claim 1, in which a throughflow measurement device (24) for the flow medium (M) is disposed on the flow medium side downstream of the branching-off point (22) of the overflow line (20).

3. Method for regulating a short-term power increase of a steam turbine with an upstream waste heat generator (1) with a number of economiser, evaporator and superheater heating surfaces (4) forming a flow path (2) through which a flow medium (M) flows, in which flow medium (M) branches off from the flow path (2) and is injected into the flow path on the flow medium side downstream of a superheater heating surface (10),
wherein the flow medium (M) is branched off upstream of the first evaporator heating surface (8) on the flow medium side and on the flow medium side downstream of the last economiser heating surface(6),
**characterised in that** a throughflow valve (26) for the flow medium (M) is disposed on the flow medium side downstream of the branching point (22) of the overflow line (20) and the throughflow of the flow medium (M) is regulated.

4. Method according to claim 3, in which on the flow medium side the throughflow of the flow medium (M) is measured downstream of the branching-off point (22) of the overflow line (20).

## Revendications

1. Générateur de vapeur (1) à récupération de la chaleur perdue pour une centrale à turbine à gaz et à turbine à vapeur, ayant un certain nombre de surfaces (4) de chauffe d'économiseur, d'évaporateur et de surchauffeur parcourues par un fluide (M) en écoulement, dans lequel un conduit (20) de trop-plein bifurque du trajet (2) d'écoulement et conduit à un certain nombre de robinets (14) d'injection montés dans le trajet (2) d'écoulement dans le sens du fluide en écoulement en aval d'une surface (10) de chauffe de surchauffeur,
dans lequel l'emplacement (20) de la bifurcation du conduit (20) de trop-plein est disposé en amont de la première surface (8) de chauffe d'évaporateur dans le sens du fluide en écoulement et en aval d'une surface (6) de chauffe d'économiseur dans le sens du fluide en écoulement, **caractérisé en ce que** l'emplacement (22) de bifurcation du conduit (20) de trop-plein est disposé dans le sens du fluide en écoulement en aval de la dernière surface (6) de chauffe d'économiseur et un robinet (26) de réglage du débit du fluide (M) en écoulement est monté dans le sens du fluide en écoulement en aval de l'emplacement (22) de bifurcation du conduit (20) de trop-plein.

2. Générateur de vapeur (1) à récupération de la chaleur perdue suivant la revendication 1, dans lequel un dispositif (24) de mesure du débit du fluide (M) en écoulement est monté dans le sens du fluide en écoulement en aval de l'emplacement (22) de bifurcation du conduit (20) de trop-plein.

3. Procédé de régulation d'une augmentation de puissance à bref délai d'une turbine à vapeur ayant un générateur de vapeur (1) à récupération de la chaleur perdue en amont, comprenant un certain nombre de surfaces (4) de chauffe d'économiseur, d'évaporateur et de surchauffer parcourues par un fluide (M) en écoulement et formant un trajet d'écoulement, dans lequel on dérive le fluide (M) en écoulement du trajet (2) d'écoulement et on l'injecte dans le trajet d'écoulement dans le sens du fluide en écoulement en aval d'une surface (10) de chauffe de surchauffeur, dans lequel on dérive le fluide (M) en écoulement en amont de la première, dans le sens du fluide en écoulement, surface (8) de chauffe d'évaporateur et de la dernière, dans le sens du fluide en écoulement, surface (6) de chauffe d'économiseur, **caractérisé en ce que**, dans le sens du fluide en écoulement, en amont de l'emplacement (22) de dérivation du conduit (20) de trop-plein, est monté un robinet (26) de régulation du débit du fluide (M) en écoulement et le débit du fluide (M) en écoulement est régulé.

4. Procédé suivant la revendication 3, dans lequel, en aval, dans le sens du fluide en écoulement, de l'emplacement (22) de dérivation du conduit (20) de trop-plein, on mesure le débit du fluide (M) en écoulement.
